# EUROPEAN PATENT APPLICATION

(11) **EP 4 398 184 A1**
(43) Date of publication of application: **10.07.2024**
(21) Application number: 23290001.9
(22) Date of filing: 05.01.2023
(51) Int. Cl.: G06T 3/40, G06T 11/00

(54) **IMAGE GENERATOR NETWORK AND DEVICE**

(71) Applicant: Beijing Xiaomi Mobile Software Co., Ltd., Beijing 100085 (CN)
(72) Inventor: Moschetti, Giuseppe, 92100 Boulogne-Billancourt (FR); Veit, Thomas, 92100 Boulogne-Billancourt (FR); Massip, Pierre, 92100 Boulogne-Billancourt (FR)
(74) Representative: dompatent von Kreisler Selting Werner - Partnerschaft von Patent- und Rechtsanwälten mbB

(57) **Abstract**

Method for training an image generator network, including the steps of: Acquiring a high resolution (HR) image of a scene by a first device; Acquiring a low resolution (LR) image of the same scene by a second device, wherein the LR image has a lower resolution as the HR image; Providing the HR image to the image generator network to generate a simulated image, wherein the image generator network includes a downscale module to downscale the HR image and a blur module to adapt the blur of the simulated image; Providing the LR image and the simulated image to a discriminator network to judge a difference between the simulated image and the LR image; Adapting the image generator network for training based on the result of the discriminator network to minimize the difference between the simulated image and the LR image.

## Description

The present invention relates to a method for image processing and in particular generation of images by a super-resolution neural network (SRNN). Further, the present invention relates to a method of training of an image generator network to generate images for training of the SRNN. Further, the present invention relates to a method for training such an SRNN, a device implementing such SRNN, and a software storage device.

Image quality in recent smartphones had improved a lot in last decades, to perform at best and get some zoom capabilities as DSLR cameras, smartphone manufacturer started to have several optical modules (wide angle to tele). To reach very high digital zoom, numerical solutions are required. Classical interpolation methods like bicubic interpolation or the like, tend to provide blurry low perceptual quality results.

Super-resolution (SR) solution aims to increase the image resolution by reducing the images sampling step, i. e. inferring frequencies beyond the Nyquist limit of the sensor and also to deblur/sharpen the frequencies below the Nyquist limit. Therein, SR solutions shall keep the natural effect in the picture, i.e. to conserve the blur and sharpness variation due to the varying depth in the image. Thus, it is intended to provide a digitally enhanced image that is as close as possible to what would be provided by an optical zoom.

Image processing algorithms make the most out of machine learning technique. However, these machine learning technique relay on large data set to train the parameters of their models. One solution to generate these large data sets is to simulate them. However, this usually requests deep knowledge about the simulated device,

It is an object of the present invention to provide a method for training of an image generator network with improved simulation results of training images and a super-resolution neural network providing increased performance.

The problem is solved by a method for training of an image generator network according to claim 1, a method for training a super-resolution neural network (SRNN) according to claim 11, a device for training an image generator network according to claim 12, a device for training a super-resolution neural network according to claim 13, a device for image processing according to claim 14 and a software storage device according to claim 15.

In an aspect of the present invention, a method for training an image generator network is provided. The method includes a step of:
a) Acquiring a high resolution (HR) image of a scene by a first device;
b) Acquiring a low resolution (LR) image of the same scene by a second device, wherein the LR image has a lower resolution as the HR image;
c) Providing the HR image to the image generator network to generate a simulated image, wherein the image generator network includes a downscale module to downscale the HR image and a blur module to adapt the blur of the simulated image;
d) Providing the LR image and the simulated image to a discriminator network to judge a difference between the simulated image and the LR image;
e) Adapting the image generator network for training based on the result of the discriminator network to minimize the difference between the simulated Image and the LR image.

Therein, the first device is different than the second device. Thus, by the image generator network a simulated image with a decreased resolution is generated, wherein the image generator network preserves the blur characteristics provided by the LR image of the second device. The LR image and the simulated image are provided to a discriminator network to judge, whether a difference between the simulated image and the LR image is noticeable. Dependent on the result of the discriminator network the image generator network and in particular the blur module of the image generator network is adapted for training to minimize the difference between the simulated image and the LR image. Hence, the HR image of the first device can be used as image source providing a high-quality, high-resolution image of the scene. However, the image generator network is trained to adapt the blur module such that the blur characteristics of the second device are implemented, No deep knowledge either of the first device or the second device are necessary, since due to the comparison by the discriminator network, realistic blur can be achieved. In addition, it is possible to use existing database of HR image data from generated by the first device or at least a similar device, i.e. having the same optics and zoom ratio. Blur characteristics of the implementing device can be trained to the image generator network. Thus, by the trained image generator network a reliable set of training images for a super-resolution neural network (SRNN) can be generated.

Preferably, the aforementioned steps are repeated for a plurality of HR images and LR images until the discriminator network cannot discriminate the LR image and the simulated image. Alternatively, the steps c) to e) are repeated with the same LR image and HR image again in until the discriminator network cannot discriminate the LR image and the simulated image. In addition and in particular when using only one image for training, different patches of the one or more LR images and HR images could be used for training. In this situation the image generator network is able to fully synthesize or simulate the blur characteristics of the second device and is able to generate simulated image from the HR image of the first device such that the discriminator network cannot tell, whether the simulated image is from the first device or second device.

Preferably, for each LR image and simulated image, i. e. each pair of LR image and simulated image, to be discriminated by the discriminator network, the discriminator network is adapted for training until discrimination of the LR image and the simulated image is possible for the discrimination network. Thus, for each LR image and simulated image also the discriminator network is improved by training to discriminate whether the simulated image is different from the provided LR image or not. If the discriminator network cannot achieve discrimination between the LR image and the simulated image, the image generator network is fully trained and cannot be further improved by the present discriminator network. However, the image generator network might seem fully trained (converged or found an optimal solution), but the discriminator has diverged or has never become good enough, In this case the discriminator loss can be used to check that discriminator has improved but the was beaten by the generator.

Preferably, the training of the image generator network and the discriminator network rely on a generative adversarial network frame (GAN) designed by Goodfellow et al., 2014.

Preferably, the image generator network and the discriminated network are trained by competitive training. Therein, the image generator network is improved by training such that the simulated image resembles the LR image to fool the discriminator network such that the discriminator cannot judge a difference between the simulated image of the image generator network and the LR image of the second device. At the same time the discriminator network is improved to improve its abilities to discriminate between the LR image and the simulated image thereby further challenging the simulation or synthesizing abilities of the image generator network.

Preferably, the image generator network comprises for training one or more modules for adapting an image property of the simulated image to the LR image. By nature, competitive learning between the discriminator network and the image generator network is instable and may result in situations that the discriminator learns to tell the difference between the LR image and the simulated image by other image properties such as color, exposure, and noise or a combination thereof. Similar, the image generator network could be trained in case of such instability to adapt these image properties of the simulated image to the LR image in order to fool the discriminator network instead of applying the correct blur of the second device. Thus, the image generator network is enlarged, i.e. the complexity of the image generator network is increased to consider one or more modules for adapting an image property of the simulated image to resemble to the image property of the LR image.

Preferably, the final image generator network used for generating a set of training images for the SRNN only includes the downscale module and the blur module. Since usually adapting the image properties of the training images is not desired, artificially the downscale module and the blur module can be selected and the one or more further modules can be disregarded. Thereby, only the blur characteristics of the second device are simulated in the images generated by the final image generator network for training the SRNN.

Preferably, in order to avoid instability of the training of the image generator network and preferably the discriminator network a random image property value can be added/modified in the LR image before providing it to the discriminator network, i.e. image augmentation is performed by modifying an image property. Thus, by the image property value a respective image property of the LR image is randomized/augmented and cannot be used by the discriminator network to discriminate between the LR image and the simulated image. Therein, the image property which is used to apply as a random image property value, might be one or more of a color, exposure, or noise.

Preferably, the LR image and the HR image are aligned to each other before applying to the image generator network and providing the LR image to the discriminator network. Thereby, full overlap of the HR image and the LR image is ensured such that the HR image and the LR image show the same scene and in particular the discriminator network cannot tell by differences of the scene, tilt or the like difference between the LR image and the simulated image.

Preferably, the first device and the second device share the same field of view. Thus, full alignment and overlap might not be necessary in order to train the image generator network.

Preferably, the scene comprises a large variety of frequencies, especially high frequencies, sharp edges, and high contrast. In particular, the scene is provided by a resolution chart.

Preferably, the downscale module of the image generator network scales the HR image down by a factor of 2 or more and preferably 4 or more. Thereby, blur characteristics of the second device are maintained.

Preferably, the simulated image has the same resolution than the LR image. Thus, also by the resolution the discriminator network cannot tell the difference between the LR image and the simulated image.

In another aspect of the present invention a method for generating a set of training images for training an image processing network is provided. The method includes:
Providing a set of HR training images; and
Applying the set of HR training images to an image generator network trained as described before in order to generate/simulate low resolution versions of the HR images.

Thus, the set of training images comprises a plurality of HR images and a corresponding number of low resolution images. Therein, the simulated low resolution images comprise blur characteristics of the second device as described before. In particular, the second device is the implementing device of the SRNN to be trained by the set of training images.

In another aspect of the present invention a method for training a super-resolution neural network (SRNN) is provided including:
Method for training a super-resolution neural network, SRNN, including:
Acquiring a high resolution (HR) image;
Providing the HR image to an image generator network trained according to the method described above, to generate a low resolution (LR) image of the HR image having a resolution lower than the HR image;
Providing the generated LR image to the SRNN to generate a super-resolution (SR) image;
Comparing the SR image of the SRNN to be trained with the HR image and adapting the SRNN for training.

Therein, the HR image may be acquired by a camera sensor device of the implementing device of the SRNN or may be the set of HR images with which the image generator network has been trained or may come from another source such as a DLSR camera or any other high resolution camera, wherein the SRNN shall be trained to synthesize the high resolution when starting with an LR image of the implementing device in the use case. In particular, knowledge about blur of the implementing device is not necessary since this has been already imprinted to the image generation network during training, when using the implementing device as second device. Further, by simulating the image (blur) of the second device by the image generator network, it allows to train the SRNN with input that as the native resolution of the implementing device and so to be closer to the real use case.

Preferably, the aforementioned steps are repeated for a plurality of HR images in order to improve the SRNN and minimize the difference between the SR image of the SRNN to be trained and the HR image.

Preferably, comparing is done by a cost function such that by training the cost function is minimized.

Preferably, the SR image has a resolution equal to the HR image for training.

In another aspect of the present invention a method for image processing is provided including the steps:
Acquiring an image in particular by a camera sensor; and
Providing the acquired image to a SRNN trained according to the method for training a super-resolution neural network described before in order to generate an SR image of the acquired image.

Although above and in the following, method steps are described consecutively and in a given order, the present invention is not limited to this and individual steps of the methods can be performed simultaneously or in a different order.

In another aspect of the present invention a device for training an image generator network is provided comprising a processor and a storage device, wherein the storage device stores instructions, which when executed by the processor perform the steps of the method for training an image generator network described before.

In another aspect of the present invention a device for training a super-resolution neural network (SRNN) is provided comprising a processor and a storage device, wherein the storage device stores instructions, which when executed by the processor performs the steps of the method for training a SRNN described before.

In another aspect of the present invention and device for image processing is provided comprising a camera sensor for acquiring an image and an SRNN trained according to the method described before. Therein, the SRNN is connected to the camera sensor to generate an SR image of the acquired image. Thus, according to the present invention an image generator network is provided in order to generate training data for the SRNN, which can be implemented in the present device to generate SR images of the acquired images. In particular, the device is a terminal device such as a smartphone or the like.

In.another aspect of the present invention a software storage device is provided which stores instructions which when executed by a processor perform the steps of the method for training an image generator network described before.

In another aspect of the present invention a software storage device is provided, wherein the storage device stores instructions, which when executed by a processor perform the steps of the method for training a super-resolution neural network described before.

In the following the present invention is described in more detail with reference to the accompanying figures. The figures show:
Figure 1 a schematic flow diagram of the method according to the present invention,
Figure 2 a schematic illustration of the method for training an image generator network,
Figure 3 a schematic flow diagram of a method for training a super-resolution neural network,
Figure 4A and 4B embodiments of a device according to the present invention, and
Figure 5 an embodiment of implementing a SRNN according to the present invention.

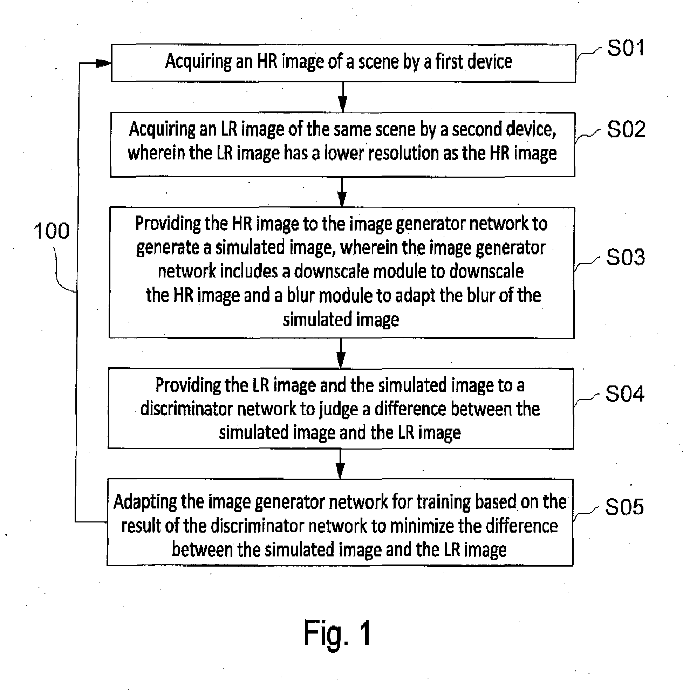

In the following it is referred to Figure 1, showing a flow diagram of the present invention. The method for training an image generator network includes:
In step S01, a high resolution (HR) image of a scene is acquired by a first device. In step 502, a low resolution (LR) image of the same scene is acquired by a second device, wherein the LR image has a lower resolution as the HR image. Therein, the first device and the second device are different.

In step 503, HR image is provided the image generator network to generate a simulated image, wherein the image generator network includes a downscale module to downscale the HR image and a blur module to adapt the blur of the simulated image.

In step S04, the LR image and the simulated image are provided to a discriminator network to judge a difference between the simulated image and the LR image.

In step 505, the image generator network is adapted for training based on the result of the discriminator network to minimize the difference between the simulated image and the LR image.

For training, steps S01 to S05 can be repeated as indicated by arrow 100 in Fig. 1. Alternatively, for training the same LR image and HR image is used for subsequent training iterations. In this case only steps S03 to S05 are repeated a plurality of times.

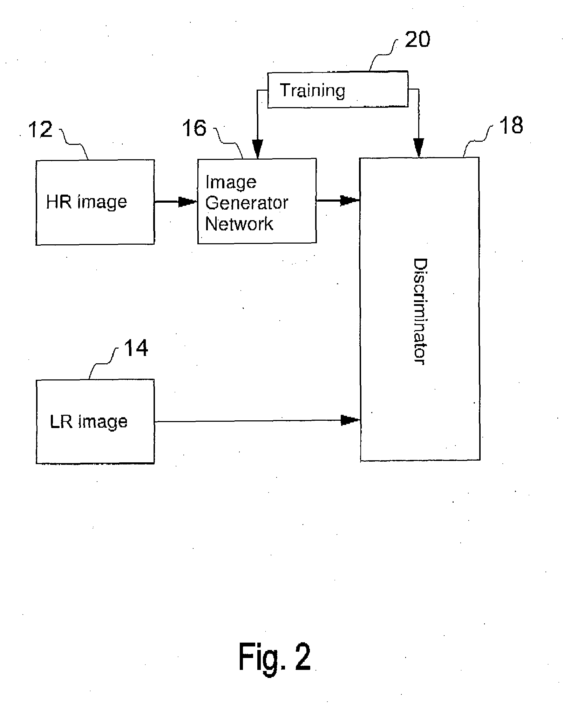

Referring to Figure 2. According to the present invention an HR image 12 is generated by a first device. From the same scene by a second device a LR image 14 is generated. The HR image 12 and the LR image 14 might be aligned to overlap. Therein, the LR image has a lower resolution than the HR image 12. The HR image 12 is provided to an image generator network 16, wherein the HR image 12 is downscaled by the image generator network 16 and the blur of the simulated image 12 is adapted to the blur of the HR image 12 in order to create a simulated image having a lower resolution than the HR image 12. In particular, the simulated image generated by the image generator network 16 has a similar or the same resolution as the LR image 14. Downscaling can be performed by a factor of two or more and preferably four or more. According to the present invention the image generator network 16 is trained to synthesize or simulated the blur characteristics of the second device present in the LR image 14 and apply the blur characteristics to the simulated image. Therefore, the simulated image of the image generator network 16 and the LR image of the second device is provided to a discriminator network 18, wherein the discriminator network 18 tries to discriminate between the simulated image and the LR image. If the discriminator network 16 can judge a difference between the simulated image and the LR image 14, training 20 is applied to the image generator network 16. At the same time, during the process of discriminating the simulated image and the LR image 14, the discriminator network 18 is also trained to improve its capability to distinguish between the simulated image and the LR image 14. Thus, the image generator network 16 and the discriminator network 18 are in a competitive learning scheme implemented for example in a GAN framework.

The solution may involve the training of a Generative Adversarial Network' (GAN). A scene is acquired from a sensor of a first device A and a sensor of a second device B. Randomly selected patches from the images may be used to train the GAN.

At each step of the training, the image generator network (G) and discriminator network (D) are trained by:
- a patch from device A is fed to G who learns to generate patches that looks like taken from device B by learning to fool D.
- Two patches, one from device A and one from device B are fed to D, who learns to classify the patches as coming from devices A or B.

The process is highly unstable, and care is needed to allow convergence. The convergence is successful when the Discriminator cannot distinguish between whether the image come from device A or device B, meaning that G from a device A input, produces outputs that are indistinguishable from the sensor B. In other words, it is intended that G shall prevail by defeating a well-trained D.

However, there are many reasons why GAN might not converge, GANs are known to have an unstable training process. For example, D might,win the competition, and learn to distinguish the patches better than G to mimic them. Another example of divergence is when D learns to distinguish based on features that are not relevant to the learning of G.

In the present invention, G needs to be able to fool D by mimicking the blur/sharpness of device B, which means that D needs to learn to classify only based on blur/sharpness to be able to drive the learning of G. However, images that come from two different sensors always show differences in terms of exposure, colors, or noise. As a result, if D learns to classify by exploiting those differences (color, exposure, noise), G tries to mimic the same colors/exposure/noise rather than the sharpness/blur.

In order to avoid D to exploit the differences between the devices, in the present invention the training is stabilized by complexifying G. G might include modules that learn the color /exposure difference. Another possibility is to augment the data coming from device B, by adding random color/exposure/noise to force D to focus only on the sharpness to classify the patches, which by consequences pushes G to also mimic the sharpness of device B to fool D.

The trained G can be reused to train a Super-Resolution model, by generating a dataset of low resolution images that resemble an image taken from device B and therefore having as target high resolution images coming from device A.

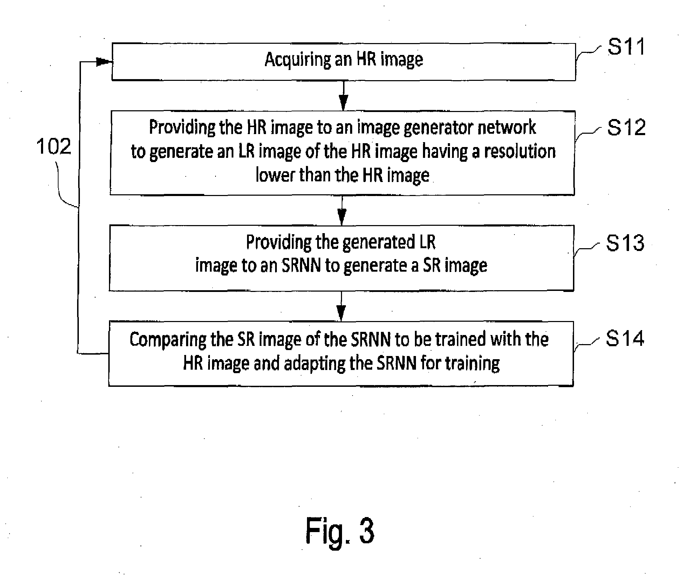

Referring to Figure 3 showing a schematic flow diagram of a method for training an SRNN with the image generator network trained according to the embodiments of Figures 1 and 2, The method includes:
In step 511, Acquiring a high resolution (HR) image.

In step S12, the HR image is provided to an image generator network trained according to method described above, to generate a low resolution (LR) image of the HR image having a resolution lower than the HR image.

In step S13, the HR image and the generated LR image are provided to the SRNN to generate a super-resolution (SR) image.

In step S14, the SR image of the SRNN to be trained is compared with the HR image and adapting the SRNN for training.

For training, steps S11 to S14 can be repeated as indicated by arrow 102 in Fig. 1.

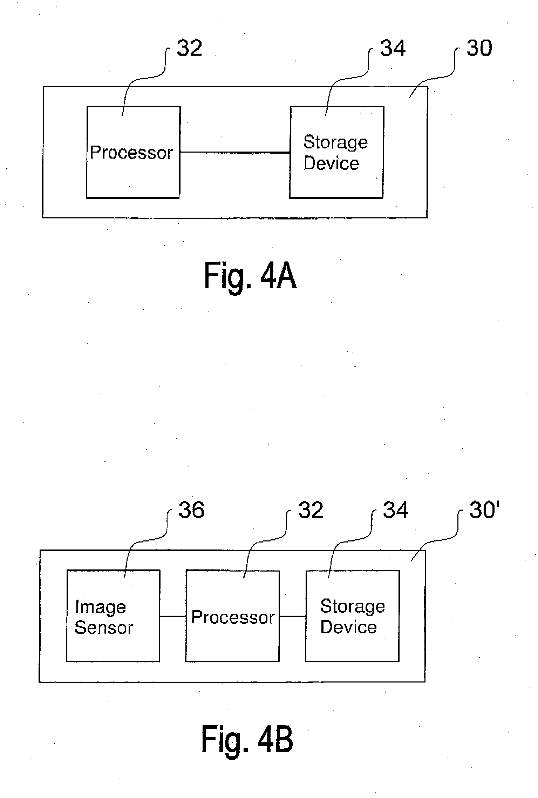

Referring to Figure 4A showing a device implementing the method for training an image generator network described before. The device 30 comprises a processor 32 and a storage device 34. Therein, the processor 32 may be a dedicated image processor or may be the main processor of the device 30 controlling main functionality of the device 30. Therein, the HR image and LR image may be acquired from the storage device 34 and processed by the processor 32 as described before with reference to the methods.

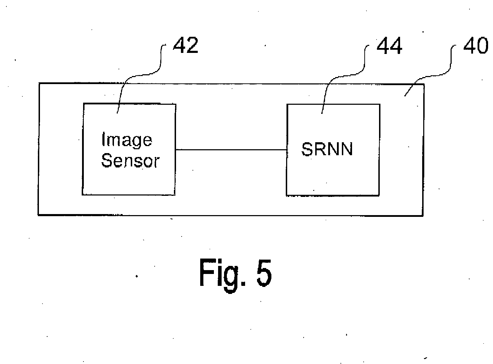

Referring to Figure 4B showing a device 30' implementing the method for training an SRNN described before comprising a processor 32 and a storage device 34 similar to the device 30 of Figure 5. In addition, the device 30' in Figure 4B may comprise an image sensor 36 to acquire an image. In another embodiment, the HR image for training is acquired from the storage device. Therein, the HR image is provided to an image generator network trained as described before to create a training image set of the HR image and the LR image as simulated image of the image generator network.

Referring to Figure 5 showing a device implementing the SRNN trained according to the present invention by utilizing an image generator network as described before. The device 40 comprises a SRNN 44 connected to an image sensor 42. Images are acquired by the image sensor 42 and transferred to the SRNN 44, wherein by the SRNN 44 SR images are generating with high quality. Therein, the device 40 may be a terminal or user device such as a smartphone tablet or the like.

## Claims

1. Method for training an image generator network, including:
a) Acquiring a high resolution, HR, image of a scene by a first device;
b) Acquiring a low resolution, LR, image of the same scene by a second device, wherein the LR image has a lower resolution as the HR image;
c) Providing the HR image to the image generator network to generate a simulated image, wherein the image generator network includes a downscale module to downscale the HR image and a blur module to adapt the blur of the simulated image;
d) Providing the LR image and the simulated image to a discriminator network to judge a difference between the simulated image and the LR image;
e) Adapting the image generator network for training based on the result of the discriminator network to minimize the difference between the simulated image and the LR image.

2. Method according to claim 1, including repeating steps a) to e) for a plurality of HR images and LR images until the discriminator network cannot discriminate the LR image and the simulated image or repeating steps c) to e) for a single HR image and LR image until the discriminator network cannot discriminate the LR image and the simulated image.

3. Method according to claim 1 or 2, wherein for each LR image and simulated image to be discriminated by the discriminator network, adapt the discriminator network until discriminating the LR image and simulated image, or fails.

4. Method according to any of claims 1 to 3, wherein the image generator network comprises for training one or more modules for adapting an image property of the simulated image to the LR image.

5. Method according to claim 4, wherein a final image generator network is established by only using the downscale module and the blur module.

6. Method according to any of claims 1 to 5, including: adding a random image property value to the LR image before providing to the discriminator network.

7. Method according to any of claims 4 to 6, wherein the image property comprises one or more of color, exposure, and noise.

8. Method according to any of claims 1 to 7, wherein the downscale module of the image generating network scales the HR image down by a factor of 2 or more and preferably 4 or more.

9. Method according to any of claims 1 to 8, wherein the simulated image has the same resolution than the LR image.

10. Method according to any of claims 1 to 9, wherein the image generator network and the discriminator network are trained by competitive training.

11. Method for training a super-resolution neural network, SRNN, including:
Acquiring a high resolution, HR, image;
Providing the HR image to an image generator network trained according to any of claims 1 to 10, to generate a low resolution, LR, image of the HR image having a resolution lower than the HR image;
Providing the generated LR image to the SRNN to generate a super-resolution, SR, image;
Comparing the SR image of the SRNN to be trained with the HR image and adapting the SRNN for training.

12. Device for training an image generator network, comprising a processor and a storage device, wherein the storage device stores instructions which when executed by the processor perform the steps of the method according to any of claims 1 to 10.

13. Device for training a super-resolution neural network, SRNN, comprising a processor and a storage device, wherein the storage device stores instructions which when executed by the processor perform the steps of the method according to claim 11.

14. Device for image processing comprising a camera sensor for acquiring an image, an SRNN trained according to the steps of the method of claim 11 and connected to the camera sensor to generate an SR image of the acquired image.

15. Software storage device wherein the storage device stores instructions which when executed by a processor perform the steps of the method according to any of claims 1 to 12.
